# EUROPEAN PATENT SPECIFICATION

(11) **EP 4 514 183 B1**
(45) Date of publication and mention of the grant of the patent: **10.12.2025**
(21) Application number: 23724387.8
(22) Date of filing: 21.04.2023
(51) Int. Cl.: A47J 31/36, A47J 31/60

(54) **MACHINE FOR DISPENSING AN INFUSION BEVERAGE**
MASCHINE ZUR AUSGABE EINES INFUSIONSGETRÄNKES
MACHINE POUR DISTRIBUER UNE BOISSON À INFUSION

(30) Priority: 28.04.2022 IT 202200008435
(43) Date of publication of application: 05.03.2025
(73) Proprietor: LELIT S.R.L., 25045 Castegnato (Brescia) (IT)
(72) Inventor: TOCK, Daniel, 25045 Castegnato, Brescia (IT)
(74) Representative: Zanardelli, Davide
(86) International application number: PCT/IB2023/054075
(87) International publication number: WO 2023/209514

(56) References cited:
- EP-A1- 1 764 015
- EP-A1- 3 015 422
- US-B2- 6 883 685

## Description

The present invention relates to a machine for dispensing an infusion beverage, such as coffee, chamomile, tea or herbal tea, in particular for domestic use.

It is now known that in coffee machines, colonies of microorganisms may develop, such as bacteria, fungi, molds and germs, etc.

It has been observed that the proliferation of microorganisms is due to a multiplicity of factors such as the change in temperature during the beverage infusion and dispensing process.

Numerous scientific publications address the influence of technical and microbiological parameters on the quality of the coffee obtained from infusion beverage dispensing machines. In this regard reference is made to the work of Schages, J., et al, entitled "The Influence of Technical and Microbiological Parameters on the Hygienic Quality of Coffee from Fully Automated Coffee Machines." J Bioprocess Biotech 8.324 (2018): 2. During the experiments conducted by Schages on a multiplicity of machines for dispensing infusion beverages, in particular on coffee machines, colonies of microorganisms were observed in the water tanks of all of the machines.

It will appear obvious to a person skilled in the art how the presence of an infusion fluid, for example water, stagnating within the tank of a machine for dispensing infusion beverages may result in an optimal environment for the proliferation of microbial flora.

Typically, in order to limit the presence of microorganisms within the tank, the machine is periodically cleaned and sanitized, by filling the tank with a cleaning fluid and operating the machine in such a way that the circulation of the cleaning fluid within the machine allows for the partial removal of the microbial flora, both from the tank and from the hydraulic circuits.

Disadvantageously, although the cleaning of the tank and the machine is frequent, the proliferation of microorganisms is not inhibited and the cleaning and sanitizing activity must therefore be repeated regularly.

Furthermore, the infusion beverages field is also characterized by the presence of a technical prejudice upon the basis of which it is believed that the presence of microorganisms in the infused beverage is due to poor sanitization of the cups where the beverage is poured. This bias, also described by Schages in their work, stimulated the production of single-use disposable cups.

An example of a machine for dispensing infusion beverages, wherein the tank may be made with antibacterial polymers, is described in EP 1764015 A1. Conversely, the use of a bacteriostatic additive within the plastics industry is illustrated in EP 3015422 A1.

The object of the present invention is that of proposing a machine for dispensing an infusion beverage that may be capable of at least partially obviating the above lamented drawbacks.

Said object is achieved with a machine according to claim 1. The dependent claims describe preferred embodiments of the invention.

The features and advantages of the machine and tank according to the invention shall be made readily apparent from the following description of preferred embodiment examples thereof, provided purely by way of non-limiting example, with reference to the accompanying figures, wherein:
- Figure 1 is a sectional side view of a machine for dispensing an infusion beverage in one embodiment, which is not part of the present invention;
- Figures 2-2b are perspective views of the machine of Figure 1, showing the steps for extracting/inserting a tank;
- Figure 3 is a sectional side view of the machine for dispensing an infusion beverage in a further embodiment according to the present invention, and
- Figures 4-4b are perspective views of the machine of Figure 3, showing the steps for extracting/inserting the tank.

In the following description, elements common to the various embodiments represented in the drawings are indicated with the same reference numerals.

In said drawings, a machine for dispensing an infusion beverage, for example coffee, chamomile, tea or herbal tea, according to the invention has been indicated in its entirety with the numeral 1.

Preferably, this machine 1 is for domestic use.

In a general embodiment, the machine 1 comprises a tank 2, a pump unit and a dispensing unit 3.

The tank 2 is suitable for containing an infusion fluid.

The pump unit is suitable for sucking the infusion fluid from the tank 2 and pumping said infusion fluid.

The dispensing unit 3 is arranged downstream of the pump unit and is fluidically connected thereto. Furthermore, the dispensing unit 3 comprises or is coupleable to a filtration member which is suitable for containing an organic substance wettable by the infusion fluid so as to obtain the corresponding infusion beverage to be dispensed.

The tank 2 is made of a polymeric material, preferably polypropylene or polyethylene, to which an additive comprising a bacteriostatic agent has been added.

For the purposes of this discussion, the term "bacteriostatic agent" identifies substances that are capable of inhibiting or limiting the replication of microorganisms, so as to circumscribe the proliferation of microbial and/or biotic flora. Furthermore, within the limits of the present disclosure, those substances that are capable of eliminating microorganisms are also considered to be bacteriostatic.

In one embodiment, the tank 2 is made of polypropylene random copolymer. This polypropylene random copolymer is further loaded with the additive comprising the bacteriostatic agent.

According to an alternative embodiment, the tank 2 is made of high density polyethylene with the acronym HDPE, or of a high molecular weight copolymer of ethylene-hexene. The high density polyethylene or the high molecular weight ethylene-hexene copolymer is loaded with the additive comprising the bacteriostatic agent.

It is known to the person skilled in the art that the term tank may also be replaced by the analogous term "reservoir".

Preferably, the additive is in the form of masterbatch grains.

In general, the masterbatch is a mixture formed from an inert thermoplastic polymer containing at least one additive. In more detail, the masterbatch is an aggregate in granular form that is obtained by loading a carrier resin or support polymer with a solid or liquid additive. In other words, the masterbatch is obtained by encapsulating the additive within the carrier resin by means of a hot process, followed by a step for the cooling and grain fragmentation of the carrier resin. In this way grains may be obtained with a high concentration of additives coated by a resin capsule. In the masterbatch, the additive is completely incorporated and surrounded by the support polymer, and risks of contamination or exposure of the additive are therefore minimized.

In particular, the masterbatch may contain an additive percentage varying between 15 and 80%; preferably the additive percentage may vary between 40 and 65%. According to one aspect of the invention, the carrier resin is identical or compatible with the polymeric material to be loaded with the masterbatch, so as to promote the miscibility of the masterbatch with the polymeric material.

The masterbatch may be easily blended with the polymeric material, particularly during the processes of extrusion, or injection molding or compression molding.

Preferably, the masterbatch grains used to load the polymeric material with which the tank 2 is made comprise the bacteriostatic agent coated with a capsule made of polyethylene.

In other words, the encapsulated additive used to form the masterbatch grains comprises a bacteriostatic agent and the carrier resin used to form the capsule is polyethylene.

In one embodiment, the bacteriostatic agent comprises organic substances, for example alcohols, aldehydes, phenols, cresols, surfactants or a combination thereof.

Preferably, the bacteriostatic agent comprises inorganic substances, such as acids, alkalis, halogens, heavy metal salts and oxidants. In particular, the masterbatch according to the present invention is known under the trade name of BACTERIOSTATIC PE 03250. BACTERIOSTATIC PE 03250 comprises, preferably consists of, an inorganic bacteriostatic agent that is dispersed in polyethylene (carrier resin). Furthermore, according to US FDA and European regulations, BACTERIOSTATIC PE 03250 is non-toxic and is suitable for usages that are intended for coming into contact with food.

According to one embodiment, the bacteriostatic agent comprises metal ions, for example gold, silver, zinc, or lead ions.

According to one embodiment, the percentage concentration by mass of additive in the polymeric material is comprised between 1% and 10%, preferably between 1% and 5%. In this case, the percentage concentration by mass of additive is exactly 3%.

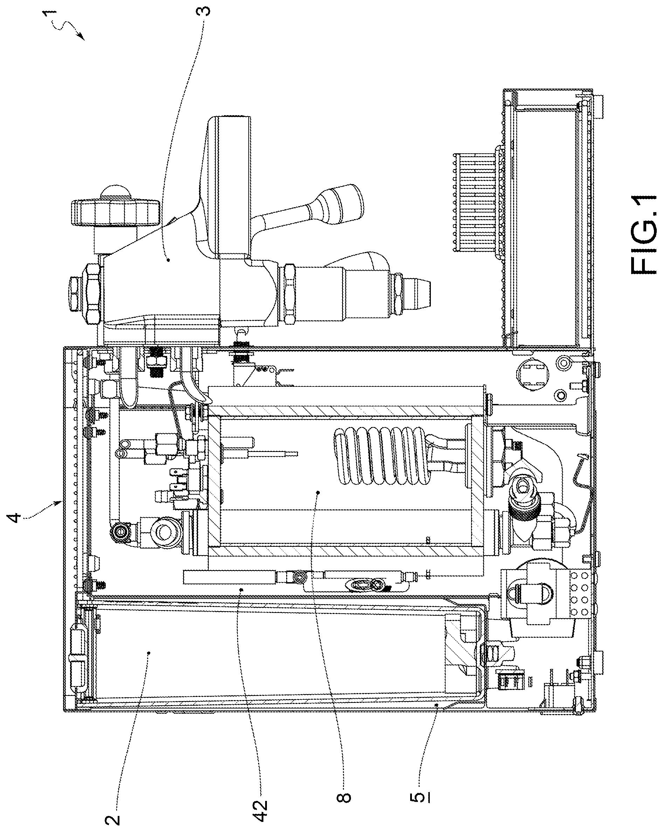

According to the embodiment illustrated in Figure 1, which is not part of the present invention, the machine 1 comprises a support frame 4 suitable for accommodating and supporting the pump unit and the dispensing unit 3. Inside said support frame 4 a housing 5 is also obtained where the tank 2 may be inserted/extracted.

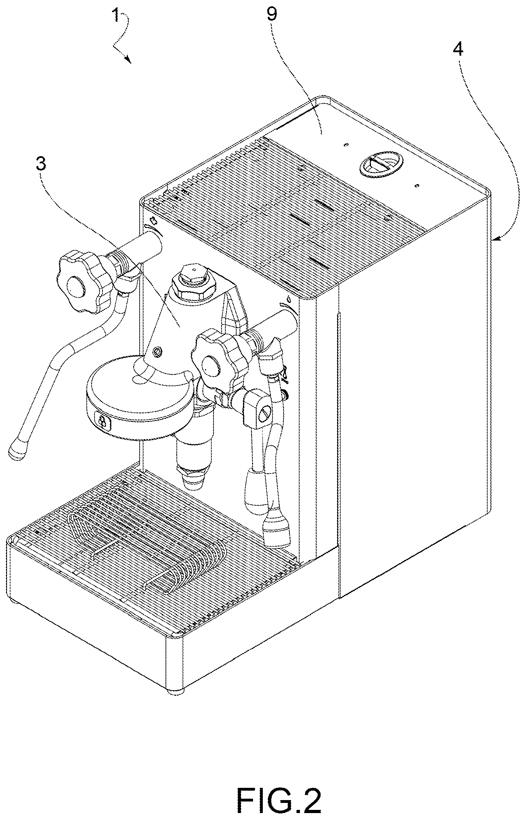

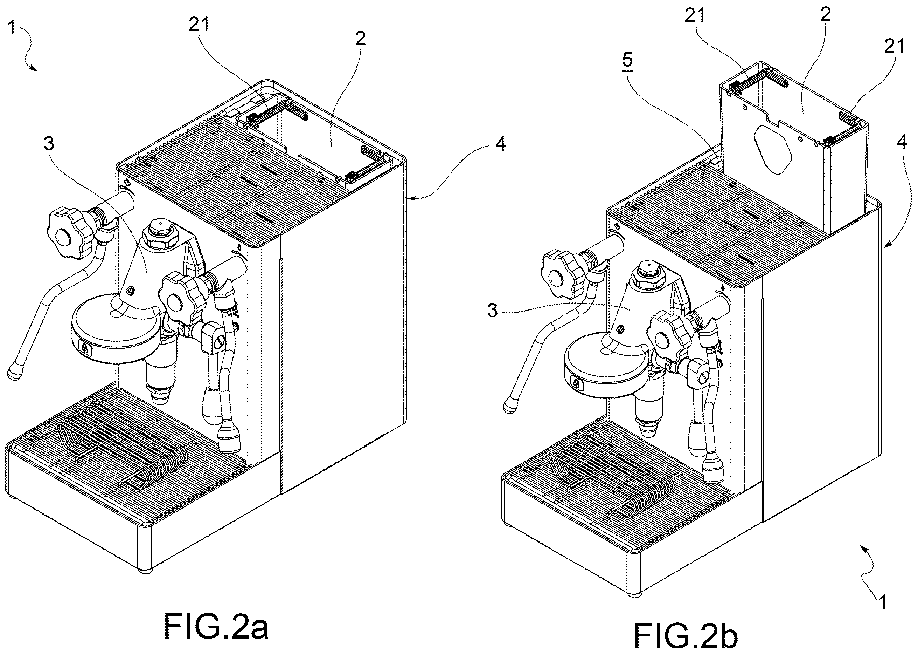

In Figures 2-2b, the steps for extracting/inserting the tank 2 from/into the housing 5 are visible. In this case, the support frame 4 is provided with a lid 9 for covering the housing 5 (Figure 2). By removing the lid 9 it is possible to have access to the housing in order to extract/insert the tank 2 (Figures 2a and 2b). The tank 2 is preferably provided with at least one handle 21 that may be grasped by a user in order to lift and move the tank 2.

According to the embodiment illustrated in Figure 1, the machine 1 also comprises a boiler 8 housed inside the support frame 4. The boiler 8 is suitable for heating the infusion fluid and the support frame 4 also comprises a separating plate 42 interposed between the boiler 8 and the housing 5.

Advantageously, by virtue of the separation plate, the heat produced by the boiler is at least partially transferred to the tank inserted into the housing. In this way any infusion fluid that may be present within the tank is pre-heated to a temperature comprised between 20°C and 40°C.

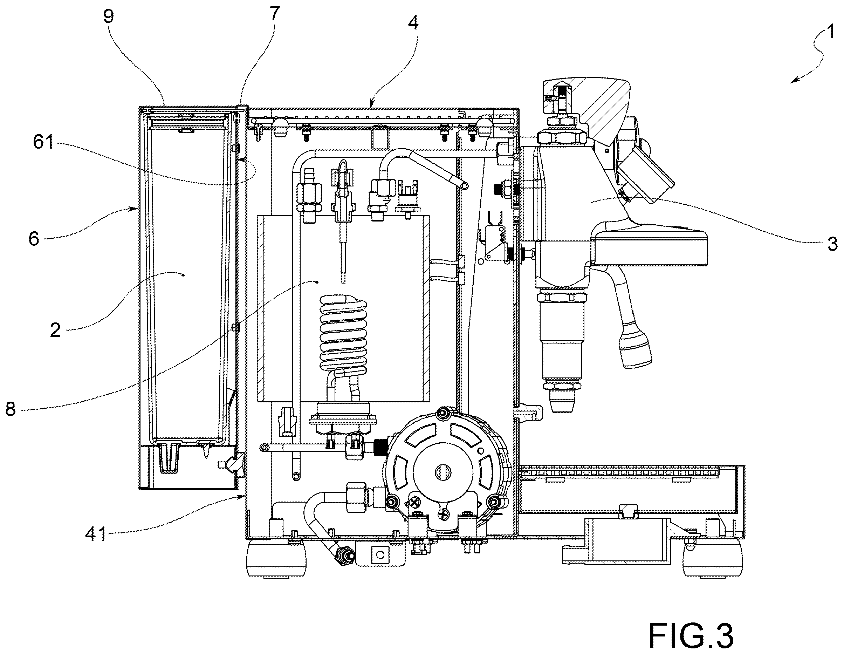

According to the invention and as illustrated in Figure 3, the machine 1 comprises a support frame 4 suitable for accommodating and supporting the pump unit and the dispensing unit 3. Furthermore, the machine also comprises a pocket 6 where the tank 2 is inserted/extracted. This pocket 6 is connected to the support frame 4 by connection means 7, so that there is a passage light between the pocket 6 and the frame 4.

For example, the connection means 7 comprise at least one flange which, whilst connecting the pocket 6 to the support frame 4, allows the pocket 6 to remain spaced apart from the frame 4.

Preferably, the pocket 6 comprises a pocket wall 61 and the support frame 4 comprises a frame wall 41. The pocket wall 61 and frame wall 41 are mutually facing and spaced apart in order to obtain the passage light between the pocket 6 and the support frame 4.

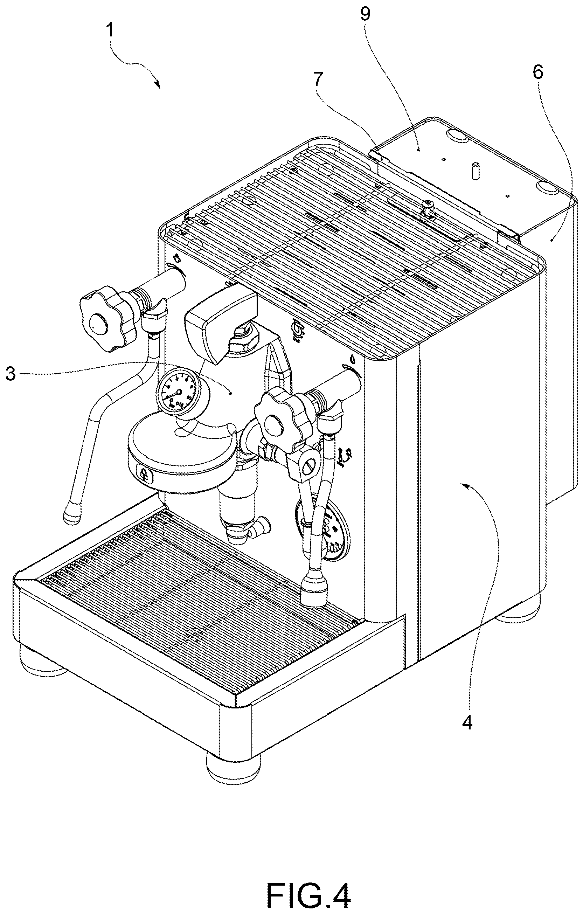

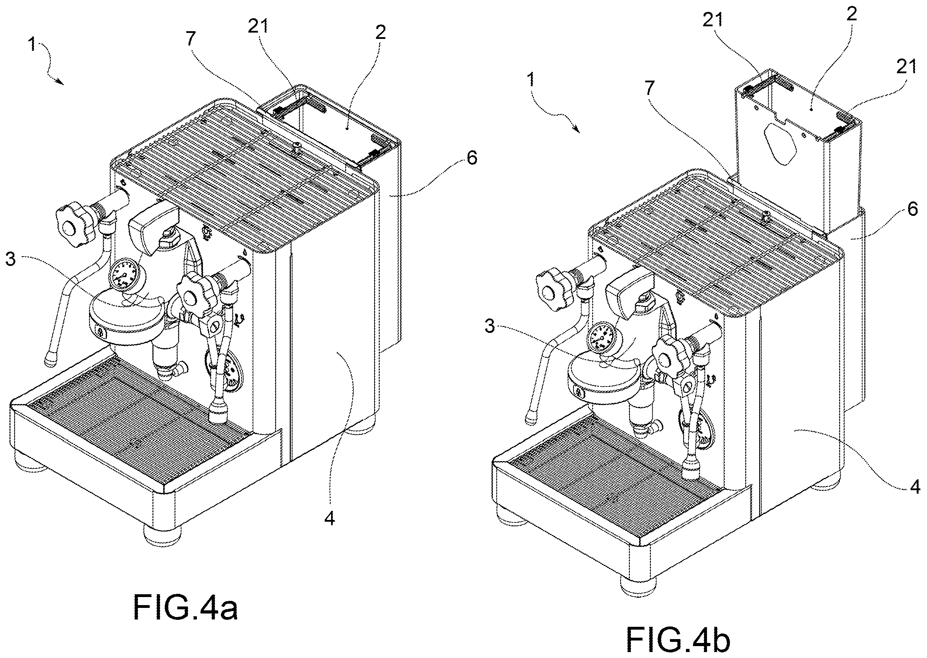

In Figures 4-4b, the steps for extracting/inserting the tank 2 from/into the pocket 6 are visible. In this case, the pocket 6 is provided with a lid 9 for covering the tank 2 (Figure 4). By removing the lid 9 it is possible to have access to the tank 2 (Figures 4a and 4b). The tank 2 is preferably provided with at least one handle 21 that may be grasped by a user in order to lift and move the tank 2.

According to the embodiment illustrated in Figure 3, the machine 1 also comprises a boiler 8 housed inside the support frame 4 and suitable for heating the infusion fluid.

Advantageously, the passage light between the pocket and the support frame improves the thermal insulation of the tank. In particular, by virtue of the distance between the pocket and the support frame, the transfer of heat from the boiler to the tank is reduced. In this way, any infusion fluid in the tank is not pre-heated and the quality of the infusion fluid itself is improved.

According to a further advantageous aspect, a tank made of a polymeric material loaded with the additive comprising the bacteriostatic agent has a synergistic effect together with the passage light between the pocket and the support frame, so that the growth and proliferation of microorganisms on the tank is hindered. In particular, the bacteriostatic agent inhibits the proliferation of fungi, molds, viruses and bacteria, whilst the thermal isolation of the tank prevents the formation of microbial flora caused by heating of the infusion fluid.

The tank 2 for containing an infusion fluid is inserted into the machine 1 for the dispensing of an infusion beverage.

The tank 2 is made of a polymeric material, preferably polypropylene or polyethylene, loaded with an additive comprising a bacteriostatic agent.

Preferably, the additive is in the form of masterbatch grains.

In one embodiment, the masterbatch grains comprise the bacteriostatic agent coated with a capsule made of polyethylene.

Preferably, the bacteriostatic agent comprises inorganic substances. In this case, the bacteriostatic agent is inorganic.

Alternatively, the bacteriostatic agent comprises organic substances, for example alcohols, aldehydes, phenols, cresols, surfactants or a combination thereof.

Innovatively, the machine according tc the invention fulfill the intended purpose.

Advantageously, the masterbatch grains prevent the growth and proliferation of microorganisms on the tank.

Advantageously, the masterbatch grains make it possible for the additive to be uniformly dispersed within the polymeric material.

According to a further advantageous aspect, the effectiveness of the bacteriostatic agent remains even after repeated tank washing cycles. This is due to the fact that the masterbatch grains continuously release small doses of bacteriostatic agent and so the antimicrobial effect therefore endures over time.

Advantageously, the masterbatch grains prevent the formation of unpleasant odors.

According to a further advantageous aspect, the masterbatch grains increase the service life of the tank and therefore of the infusion beverage dispensing machine.

According to a still further advantageous aspect, the masterbatch grains render the polymeric material antimicrobial, in such a way as to make it optimal for the implementation of a tank that is insertable into or that is applicable to machines for the dispensing of infusion beverages.

Advantageously, the antibacterial protection conferred by the bacteriostatic agent renders the tank intrinsically cleaner and also reduces the risk of microbial diffusion within the hydraulic circuits of the machine.

According to a further advantageous aspect, the machine ensures better hygienic conditions insofar as it reduces the risk of contamination of the infusion beverage with microbes and/or bacteria.

According to a still further advantageous aspect, the machine that is the object of the present invention makes it possible to maintain better organoleptic qualities of the fluid over time, for example by eliminating unpleasant odors and tastes.

To the embodiments of the machine according to the invention, a person skilled in the art, in order to meet contingent needs, may make modifications, adaptations and replacements of elements with functionally equivalent ones, without leaving the scope of protection of the following claims.

## Claims

1. A machine (1) for dispensing an infusion beverage, such as coffee, chamomile, tea, or herbal tea, preferably for domestic use, said machine comprising:
- a tank (2) suitable for containing an infusion fluid;
- a pump unit suitable for sucking the infusion fluid from the tank (2) and pumping said infusion fluid;
- a dispensing unit (3) arranged downstream of the pump unit and fluidically connected thereto, said dispensing unit (3) comprising or being coupleable to a filtration member, wherein said filtration member is suitable for containing an organic substance wettable by the infusion fluid so as to obtain the corresponding infusion beverage to be dispensed,
wherein the tank (2) is made of a polymeric material, preferably polypropylene or polyethylene, to which an additive comprising a bacteriostatic agent has been added,
wherein the machine (1) comprises a support frame (4) suitable for accommodating and supporting the pump unit and the dispensing unit (3), the machine (1) being **characterized in that** it further comprises a pocket (6) for the tank (2) to be inserted therein, said pocket (6) being connected to the support frame (4) by connection means (7), so that there is a passage light between the pocket (6) and the frame (4).

2. A machine according to the preceding claim, wherein the additive is in the form of masterbatch grains.

3. A machine according to the preceding claim, wherein the masterbatch grains comprise the bacteriostatic agent coated with a capsule made of polyethylene.

4. A machine according to any of the preceding claims, wherein the bacteriostatic agent comprises inorganic substances.

5. A machine according to any of the preceding claims, wherein the percentage concentration by mass of additive in the polymeric material is comprised between 1% and 10%, preferably between 1% and 5%.

6. A machine according to any of the preceding claims, wherein the pocket (6) comprises a pocket wall (61) and the support frame (4) comprises a frame wall (41), said pocket wall (61) and said frame wall (41) being mutually facing and spaced apart in order to obtain the passage light between the pocket (6) and the support frame (4).

## Patentansprüche

1. Maschine (1) zur Ausgabe eines Infusionsgetränks, wie Kaffee, Kamille, Tee oder Kräutertee, vorzugsweise für Hausgebrauch, die Maschine umfassend:
- einen Behälter (2), der geeignet ist, eine Infusionsflüssigkeit aufzunehmen;
- eine Pumpeneinheit, die geeignet ist, die Infusionsflüssigkeit aus dem Behälter (2) anzusaugen und die Infusionsflüssigkeit zu pumpen;
- eine Ausgabeeinheit (3), die stromabwärts der Pumpeneinheit angeordnet ist und in Fluidverbindung mit dieser steht, wobei die Ausgabeeinheit (3) ein Filterungselement umfasst oder mit diesem koppelbar ist, wobei das Filterungselement geeignet ist, eine organische Substanz aufzunehmen, die durch die Infusionsflüssigkeit benetzbar ist, um das entsprechende Infusionsgetränk zur Ausgabe zu erhalten,
wobei der Behälter (2) aus einem polymeren Material besteht, vorzugsweise Polypropylen oder Polyethylen, dem ein Additiv mit einem bakteriostatischen Mittel zugegeben wurde,
wobei die Maschine (1) einen Tragrahmen (4) umfasst, der geeignet ist, die Pumpeneinheit und die Ausgabeeinheit (3) aufzunehmen und zu tragen, wobei die Maschine (1) **dadurch gekennzeichnet ist, dass** sie ferner umfasst
eine Tasche (6) zum Einführen des Behälters (2), wobei die Tasche (6) über Verbindungsmittel (7) mit dem Tragrahmen (4) verbunden ist, so dass ein Spalt zwischen der Tasche (6) und dem Rahmen (4) vorhanden ist.

2. Maschine nach dem vorhergehenden Anspruch, wobei das Additiv in Form von Masterbatch-Granulat vorhanden ist.

3. Maschine nach dem vorhergehenden Anspruch, wobei das Masterbatch-Granulat den bakteriostatischen Mittel umfasst, der mit einer Kapsel aus Polyethylen verkleidet wird.

4. Maschine nach einem der vorhergehenden Ansprüche, wobei der bakteriostatische Mittel anorganische Substanzen umfasst.

5. Maschine nach einem der vorhergehenden Ansprüche, wobei der Massenanteil der Konzentration des Additivs in dem polymeren Material zwischen 1 % und 10 %, vorzugsweise zwischen 1 % und 5 % liegt.

6. Maschine nach einem der vorhergehenden Ansprüche, wobei die Tasche (6) eine Taschenwand (61) umfasst und der Tragrahmen (4) eine Rahmenwand (41) umfasst, wobei die Taschenwand (61) und die Rahmenwand (41) einander gegenüberliegen und beabstandet sind, um den Spalt zwischen der Tasche (6) und dem Tragrahmen (4) zu erhalten.

## Revendications

1. Machine (1) pour distribuer une boisson à infusion, telle que café, camomille, thé ou tisane, de préférence pour usage domestique, ladite machine comprenant :
- un réservoir (2) apte à contenir un fluide d'infusion ;
- un groupe de pompage apte à aspirer le fluide d'infusion du réservoir (2) et à pomper ledit fluide d'infusion ;
- une unité de distribution (3) disposée en aval du groupe de pompage et connectée fluidiquement à celui-ci, ladite unité de distribution (3) comprenant ou étant couplable à un élément de filtration, dans lequel ledit élément de filtration est apte à contenir une substance organique mouillable par le fluide d'infusion de manière à obtenir la boisson à infusion correspondante à distribuer,
dans laquelle le réservoir (2) est réalisé en un matériau polymère, de préférence polypropylène ou polyéthylène, auquel a été ajouté un additif comprenant un agent bactériostatique,
la machine (1) comprend un châssis de support (4) apte à loger et à supporter le groupe de pompage et l'unité de distribution (3), la machine (1) étant **caractérisée en ce qu'**elle comprend en outre
une poche (6) destinée à recevoir le réservoir (2), ladite poche (6) étant connectée au châssis de support (4) par des moyens de connexion (7), de sorte qu'il y ait un passage de lumière entre la poche (6) et le châssis (4).

2. Machine selon la revendication précédente, dans laquelle l'additif est sous forme de grains de mélange maître.

3. Machine selon la revendication précédente, dans laquelle les grains de mélange maître comprennent l'agent bactériostatique enrobé dans une capsule en polyéthylène.

4. Machine selon l'une quelconque des revendications précédentes, dans laquelle l'agent bactériostatique comprend des substances inorganiques.

5. Machine selon l'une quelconque des revendications précédentes, dans laquelle la concentration massique en pourcentage d'additif dans le matériau polymère est comprise entre 1 % et 10 %, de préférence entre 1 % et 5 %.

6. Machine selon l'une quelconque des revendications précédentes, dans laquelle la poche (6) comprend une paroi de poche (61) et le châssis de support (4) comprend une paroi de châssis (41), ladite paroi de poche (61) et ladite paroi de châssis (41) étant disposées en regard l'une de l'autre et espacées de manière à obtenir le passage de lumière entre la poche (6) et le châssis de support (4).
